**Europäisches Patentamt**

**European Patent Office**

**Office européen des brevets**

(19)

(11) Veröffentlichungsnummer : **0 382 757 B1**

(12)

# EUROPÄISCHE PATENTSCHRIFT

(45) Veröffentlichungstag der Patentschrift :
**15.04.92 Patentblatt 92/16**

(51) Int. Cl.$^5$ : **B60T 8/58**

(21) Anmeldenummer : **88908686.4**

(22) Anmeldetag : **05.10.88**

(86) Internationale Anmeldenummer :
**PCT/EP88/00886**

(87) Internationale Veröffentlichungsnummer :
**WO 89/03333 20.04.89 Gazette 89/09**

(54) **ANTIBLOCKIERREGELSYSTEM.**

(30) Priorität : **16.10.87 DE 3735035**

(43) Veröffentlichungstag der Anmeldung :
**22.08.90 Patentblatt 90/34**

(45) Bekanntmachung des Hinweises auf die
Patenterteilung :
**15.04.92 Patentblatt 92/16**

(84) Benannte Vertragsstaaten :
**DE FR GB SE**

(56) Entgegenhaltungen :
**DE-A- 2 313 763**
**US-A- 3 838 890**

(73) Patentinhaber : **ROBERT BOSCH GMBH**
**Postfach 30 02 20**
**W-7000 Stuttgart 30 (DE)**

(72) Erfinder : **WEISS, Karl-Josef**
**Hausgärten 33**
**W-7050 Waiblingen (DE)**
Erfinder : **VAN ZANTEN, Anton**
**Waldstrasse 15/2**
**W-7257 Ditzingen 4 (DE)**
Erfinder : **KOST, Friedrich**
**Heinrich-Ebner-Strasse 24**
**W-7000 Stuttgart 50 (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

EP 0 382 757 B1

**Beschreibung**

Die Erfindung betrifft ein Antiblockierregelssystem mit den Merkmalen des Oberbegriffs des Anspruchs 1.

Stand der Technik

Aus den DE-A-23 13 763 ist ein Antiblockierregelsystem mit den obengenannten Merkmalen bekannt; bei diesem Antiblockierregelsystem, das auch Schlupfsignale erzeugt und deshalb auch eine Referenzgeschwindigkeitsgröße benötigt, ist ein Fahrzeugverzögerungsmesser vorgesehen, der dazu benutzt wird, kurz nacheinander festzustellen, ob das Fahrzeug bei Betrieb des Antiblockierreglers oder ohne seine Wirkung besser gebremst wird. Der Fahrzeugverzögerungsgeber wird hier also zur Überprüfung des Reglers herangezogen.

Es ist auch bekannt (DE-A-25 58 712), die Referenzgeschwindigkeitsgröße, die zur Schlupfregelung benötigt wird, dadurch zu bilden, daß die Geschwindigkeitssignale zweier oder mehrerer in die Regelung einbezogener Räder durch Auswahl des am schnellsten drehenden Rads zur Referenzbildung herangezogen werden, wobei diese Radgeschwindigkeitssignale $V_R$ die gegebenenfalls notwendige Erhöhung der Referenzgeschwindigkeitssignale entweder unverzögert oder mit wenigstens einer vorgegebenen Steigung bewirken. Für die Erniedrigung der Referenzgeschwindigkeitsgröße $V_{Ref}$ im Instabilitätsfall ($V_R < V_{Ref}$) sind mehrere Rampen vorgesehen, die in Abhängigkeit vom ermittelten Radbewegungsverhalten gemäß einem vorgegebenen Algorithmus wirksam gemacht werden.

Es ist auch schon vorgeschlagen worden, bei einem Antiblockierregelsystem mit Schlupfregelung die Steigung der für die Schlupfbestimmung notwendigen Referenzgeschwindigkeitsgröße durch die Fahrzeugverzögerung zu bestimmen und diese selbst aus der Referenzgeschwindigkeitsgröße abzuleiten, wobei die Steigung der Referenzgeschwindigkeitsgröße, ebenfalls von der Fahrzeugverzögerung abhängt.

Aufgabe und Lösung

Der Erfindung liegt die Aufgabe zugrunde, ebenfalls die Fahrzeugverzögerung zu bestimmen und diese dann zur Festlegung der Steigung der Referenzgeschwindigkeit zu benutzen.

Diese Aufgabe wird durch die im Anspruch 1 angegebenenen Merkmale gelöst.

Während einer Abbremsung soll erfindungsgemäß die nicht gemessene Fahrzeugverzögerung $\dot{V}_F$ aus der gemessenen Radgeschwindigkeit $V_R$ abgeschätzt werden. Die Berechnung der Fahrzeugverzögerung erfolgt dann, wenn das Rad sich während einer Druckhaltephase im stabilen Bereich der Schlupfkurve befindet.

Da die gemessene Radgeschwindigkeit stark verrauscht ist, wird bei der Erfindung diejenige Gerade g berechnet, die den Radgeschwindigkeitsverlauf während einer Druckhaltephase am besten approximiert. Die Steigung $\dot{g}$ der Geraden entspricht dann in etwa der Fahrzeugverzögerung.

Das erfindungsgemäße Geradenfilter approximiert den Radgeschwindigkeitsverlauf während einer Druckhaltephase durch eine Gerade. Dabei werden Anfangspunkt $V_o^{p+1}$ und Steigung $\dot{V}^{p+1}$ der Geraden mit fortlaufender Messung der Radgeschwindigkeit $V_R$ identifiziert. Der Index p gibt die Nummer der jeweiligen Haltephase an. Die Identifikation erfolgt über die Methode der kleinsten Quadrate.

Die Formel für die identifizierte Radgeschwindigkeit zum Zeitpunkt $t_i$ $\hat{V}_{ti}^{p+1}$ kann wie folgt angegeben werden:

$$\hat{V}_{ti}^{p+1} = V_o^{p+1} + i \cdot \Delta t \cdot \hat{\dot{V}}^{p+1}$$

Dabei ist $\Delta t$ die Zeit zwischen zwei Messungen und $i*\Delta t$ die Zeit, die innerhalb der Haltephase vergangen ist. Der Fehler zwischen der identifizierten Radgeschwindigkeit $\hat{V}_{ti}^{p+1}$ und der gemessenen Radgeschwindigkeit $V_{R_{ti}}^{p+1}$ kann nun nach der Methode der kleinsten Quadrate über eine Haltephase $T_{Halt} = N*\Delta t$ minimiert werden. Nimmt man jetzt die Differenz der identifizierten Größen in zwei aufeinanderfolgenden Haltephasen als zusätzlichen 'a priori' Fehler an, so ergibt sich folgende Aufgabe:

Wähle die Größen $\hat{V}_o^{p+1}$ und $\hat{\dot{V}}^{p+1}$ so, daß die Größe J minimal wird. J ergibt sich zu:

$$J = \sum_{i=1}^{N} (\hat{v}_o{}^{p+1} + i \cdot \Delta t \cdot \hat{\dot{v}}{}^{p+1} - v_{R_{ti}}{}^{p+1})^2 + w_1 (\hat{v}_o{}^{p+1} - \hat{v}_{tp}{}^p)^2$$

$$+ w_2 (\hat{\dot{v}}{}^{p+1} - \hat{\dot{v}}_{tp}{}^p)^2$$

Die Koeffizienten $W_1$ und $W_2$ sind frei wählbare Gewichtsfaktoren. Je größer $W_1$ bzw. $W_2$ gewählt werden, desto sicherer ist man, daß Anfangswert und Anfangssteigung der Geraden richtig sind. Das Minimum von J erhält man durch Nullsetzen der partiellen Ableitungen nach den zu identifizierenden Größen:

$$\frac{\delta J}{\delta \hat{v}_o{}^{p+1}} = \sum_{i=1}^{N} \{\hat{v}_o{}^{p+1} + i \cdot \Delta t \, \hat{\dot{v}}{}^{p+1} - v_{R_{ti}}{}^{p+1}\} + w_1 (\hat{v}_o{}^{p+1} - \hat{v}_{tp}{}^p) \overset{!}{=} 0$$

$$\frac{\delta J}{\delta \hat{\dot{v}}{}^{p+1}} = \sum_{i=1}^{N} \{i\Delta t \, (\hat{v}_o{}^{p+1} + i\Delta t \hat{\dot{v}}{}^{p+1} - v_{R_{ti}}{}^{p+1})\} + w_2 (\hat{\dot{v}}{}^{p+1} - \hat{\dot{v}}_{tp}{}^p) \overset{!}{=} 0$$

Schreibt man die Gleichungen um, so ergibt sich:

$$\underbrace{(N+W_1) \, \hat{v}_o{}^{p+1}}_{A_N} + \underbrace{\{ \Delta t \sum_{i=1}^{N} i \} \, \hat{\dot{v}}{}^{p+1}}_{B_N} = \underbrace{\sum_{i=1}^{N} v_{R_{ti}}{}^{p+1} + W_1 \, \hat{v}_{tp}{}^p}_{C_N}$$

$$\underbrace{\{\Delta t \sum_{i=1}^{N} i \} \hat{v}_o{}^{p+1}}_{B_N} + \underbrace{\{\Delta t^2 \sum_{i=1}^{N} i^2 + W_2 \} \, \hat{\dot{v}}{}^{p+1}}_{D_N} = \underbrace{\Delta t \sum_{i=1}^{N} v_{R_{ti}}{}^{p+1} \cdot i + W_2 \, \hat{\dot{v}}_{tp}{}^p}_{E_N}$$

Innerhalb der Haltephase können die Koeffizienten $A_n$, $B_n$, $C_n$, $D_n$, $E_n$, rekursiv berechnet werden.

$$A_n = n + W_1 \qquad\qquad A_o = W_1$$

$$B_n = B_{n-1} + n \cdot \Delta t \qquad\qquad B_o = 0$$

$$C_n = C_{n-1} + V_{R_{tn}}{}^{p+1} \qquad\qquad C_o = W_1 \hat{V}_{tp}{}^p \qquad\qquad n = 1, 2 \ldots N$$

$$D_n = D_{n-1} + n^2 \cdot \Delta t^2 \qquad\qquad D_o = W_{2 \cdot \Delta t^2}$$

$$E_n = E_{n-1} + n \cdot V_{R_{tn}}{}^{p+1} \cdot \Delta t \qquad E_o = W_2 \hat{V}_{tp}{}^p$$

Zu jedem Zeitpunkt n, also auch am Ende der Haltephase (n=N) können dann die zu identifizierenden Steigungen $\hat{V}^{p+1}$ und zusätzlich der Anfangspunkt der Geraden berechnet werden:

$$\hat{V}^{p+1} = \frac{B_n \cdot C_n - A_n \cdot E_n}{B_n{}^2 - A_n \cdot D_n}$$

$$\hat{V}_o{}^{p+1} = \frac{C_n \cdot D_n - E_n \cdot B_n}{A_n \cdot D_n - B_n{}^2}$$

Die erfindungsgemäße Lösung ermöglicht eine gute Abschätzung der Fahrzeugverzögerung auch bei größeren Störungen der Radgeschwindigkeit. Bei guter Anfangsschätzung ist eine schnelle Identifikation möglich. Über die Gewichtsfaktoren $W_1$ und $W_2$ kann die Vergangenheit mitberücksichtigt werden (das Filter lernt oder vergißt).

Anhand der Zeichnung wird ein Ausführungsbeispiel der Erfindung erläutert.

Es zeigen

Fig. 1 ein Blockschaltbild eines erfindungsgemäß ausgebildeten Antiblockierers,
Fig. 2 Diagramme zur Erläuterung.

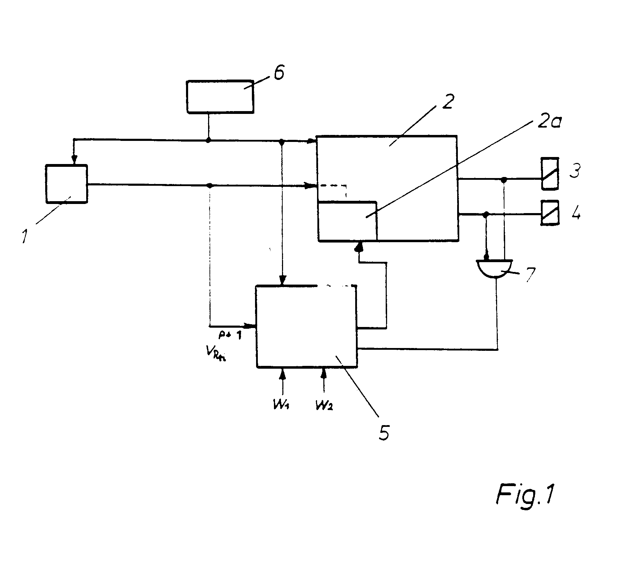

In Fig. 1 ist mit 1 die Meßeinrichtung zur Bestimmung der Radgeschwindigkeit bezeichnet. Deren digitale Ausgangssignale werden einer Auswerteschaltung 2 zugeführt, die in bekannter Weise daraus Bremsdrucksteuersignale für ein dem Rad zugeordnetes Einlaßventil 3 und Auslaßventil 4 erzeugt. Die Auswerteschaltung 2 enthält zumindest auch einen Schlupfregler, für den ein Referenzgeschwindigkeitssignal benötigt wird, die in einem Teil 2a der Auswerteschaltung 2 gebildet wird.

In dem Blockschaltbild der Fig. 1 ist noch ein Rechner 5 vorgesehen, dem ebenfalls das in Abständen $\Delta t$ ermittelte Radgeschwindigkeitssignal $V_{R_{tl}}{}^{p+1}$ zugeführt wird; außerdem werdem dem Rechner 5 die Gewichtsfaktoren $W_1$ und $W_2$ zugeführt. Ein Steuergerät 6 löst jeweils in Abständen $\Delta t$ die Berechnung von $V_{R_{tl}}{}^{p+1}$ und die Verarbeitung dieses Signals in der Auswerteschaltung 2 und im Rechner 5 aus. Der Rechner 5 soll nur in Konstanthaltephasen aktiviert werden, weshalb er über ein Und-Gatter 7 angesteuert wird, wenn das Einlaßventil angesteuert und das Auslaßventil nicht angesteuert ist (Konstanthaltung).

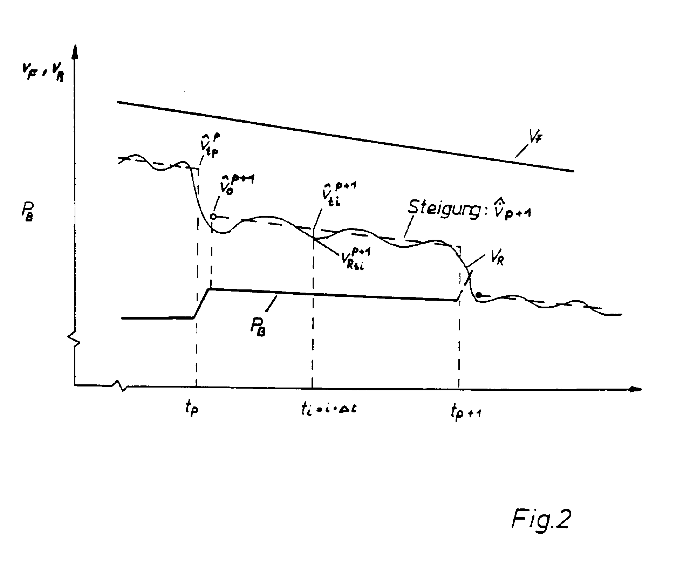

Für die Funktionsbeschreibung anhand der Fig. 2, in der die Radgeschwindigkeit $V_R$, die Fahrzeuggeschwindigkeit $V_F$ und der Bremsdruck $P_B$ aufgetragen sind, soll die (p+1). Konstanthaltephase bei gepulsten Druckaufbau betrachtet werden. In Fig. 2 is $t_p$ der Zeitpunkt des p. Druckanstiegs, $\hat{V}_{tp}{}^p$ die mit der Geraden gefilterte Radgeschwindigkeit zu diesem Zeitpunkt, $\hat{V}_o{}^{p+1}$ der Anfangspunkt der zu ermitteInden Geraden, deren Steigung $\hat{V}^{p+1}$ ist, $t_i = i \cdot \Delta t$ ein beliebiger Zeitpunkt und $\hat{V}_{ti}{}^{p+1}$ die mit der Geraden gefilterte Radgeschwindigkeit zu diesem Zeitpunkt.

In der dargestellten Konstanthaltephase errechnet der Rechner aus der laufend in Abständen $\Delta t$ ermittelten Radgeschwindigkeit $V_{R_{tl}}{}^{p+1}$, den eingegebenen Werten $W_1$ und $W_2$, der jeweiligen Schrittzahl i, der bekannten Größe $\Delta t$ und den in der vorhergehenden Konstanthaltephase ermittelten und gespeicherten Größen $\hat{V}_{tp}{}^p$ (letz-

ter mit der Gerade, gefilterter Wert für $V_R$ in der vorhergehenden Konstanthaltephase) und $\overset{\wedge}{v}_{tp}p$ die Steigung

$\overset{\wedge}{v}^{p+1}$ und gegebenenfalls den Anfangspunkt $\hat{V}_o^{p+1}$ der Geraden, und liefert den Steigungswert $\overset{\wedge}{v}^{p+1}$ and den Referenzbildungsteil 2a zur laufenden Anpassung des Referenzgeschwindigkeitsverlaufs an die ermittelte Fahrzeugverzögerung.

## Patentansprüche

1. Antiblockierregelsystem enthaltend Meßwertgeber zur Bestimmung der Radgeschwindigkeiten, eine Auswerteschaltung, der die Meßwertgebersignale zugeführt werden und die abhängig vom Bewegungsverhalten der Räder Bremsdrucksteuersignale erzeugt und einer Bremsdrucksteuereinrichtung zur Variation des Bremsdrucks an den Fahrzeugrädern, wobei in der Auswerteschaltung mit Hilfe der Radgeschwindigkeitssignale wenigstens eine dem Fahrzeuggeschwindigkeitsverlauf angenäherte Referenzgeschwindigkeitsgröße gewonnen wird, die zusammen mit den Meßwertgebersignalen zur Bestimmung des Schlupfs ausgenutzt wird und wobei die Fahrzeugverzögerung bestimmt und zur Bestimmung der Steigung der Referenzgeschwindigkeit ausgenutzt wird, <u>dadurch gekennzeichnet</u>, daß jeweils in Phasen 1 ..., p, (p+1)... der Druckkonstanthaltung zwischen zwei Druckaufbauschritten laufend Größen An ... En gemäß den folgenden Beziehungen und vorzugsweise rekursiv ermittelt werden:

$$A_n = n + W_1$$

$$B_n = \Delta t \sum_{i=1}^{n} i$$

$$C_n = \sum_{i=1}^{n} V_{R_{ti}}{}^{p+1} + W_1 \overset{\wedge}{v}_{tp}{}^{p}$$

$$D_n = \Delta t^2 \sum_{i=1}^{n} i^2 + W_2$$

$$E_n = \Delta t \sum_{i=1}^{n} V_{R_{ti}}{}^{p+1} \cdot i + W_2 \overset{\wedge}{v}_{tp}{}^{p}$$

und daß die Steigung $\overset{\wedge}{v}^{|p+1}$ der den Radgeschwindigkeitsverlauf mittelnden Geraden, wenn benötigt, gemäß der Beziehung

$$\overset{\wedge}{v}^{p+1} = \frac{B_n \cdot C_n - A_n E_n}{B_n{}^2 - A_n \cdot D_n} \qquad\qquad n = 1, \ldots, N$$

ermittelt wird, und daß die ermittelte Steigung nachfolgend als Steigung der Referenzgeschwindigkeit benutzt wird, und wobei $W_1$ und $W_2$ Gewichtungsfaktoren, $\Delta t$ der Zeitabstand der Bestimmung der Radgeschwindigkeit innerhalb der Haltephase, i = 1 bis N die Schrittnummer zwischen 1 und der höchsten Schrittzahl N, $V_{R_{ti}}{}^{p+1}$ die beim i.ten Schritt gemessene Radgeschwindigkeit innerhalb der (p+1).Haltephase, $\hat{V}_{tp}{}^{p}$ die am Ende der p.Haltephase mit der Geradengefilterte Radgeschwindigkeit und $\overset{\wedge}{v}_{tp}{}^{p}$ die ermittelte Steigung der Geraden in der Haltephase ist.

## Claims

1. Anti-lock control system containing measured-value transmitters for determining the wheel speeds, an evaluation circuit to which the signals of the measured-value transmitters are fed and which produces brake-pressure control signals as a function of the movement behaviour of the wheels, and of [sic] a brake-pressure control device for the variation of the brake pressure at the vehicle wheels, at least one reference-speed quantity approximated to the vehicle-speed variation being obtained in the evaluation circuit with the aid of wheel-speed signals and used together with the signals of the measured-value transmitters to determine the slip, and the vehicle deceleration being determined and used to determine the slope of the reference speed, characterised in that, in each case in phases 1 ..., p, (p+1) ... of holding the pressure constant between two pressure build-up steps, quantities An ... En are continuously determined in accordance with the following relations and, preferably, recursively:

$$A_n = n + W_1$$

$$B_n = \Delta t \sum_{i=1}^{n} i$$

$$C_n = \sum_{i=1}^{n} V_{R_{t_i}}^{p+1} + W_1 \hat{V}_{tp}^{p}$$

$$D_n = \Delta t^2 \sum_{i=1}^{n} i^2 + W_2$$

$$E_n = \Delta t \sum_{i=1}^{n} V_{R_{t_i}}^{p+1} \cdot i + W_2 \hat{V}_{tp}^{p}$$

and in that the slope $V^{p+1}$ of the straight line averaging the wheel-speed variation is, if required, determined in accordance with the relation

$$\hat{V}^{p+1} = \frac{B_n \cdot C_n - A_n E_n}{B_n^2 - A_n \cdot D_n}$$

and in that the slope determined is subsequently used as the slope of the reference speed, and $W_1$ and $W_2$ being weighting factors, $\Delta t$ the time interval of determination of the wheel speed within the holding phase, i = 1 to N the step number between 1 and the highest step number N, $V_{R_u}^{p+1}$ the wheel speed, measured at the $i^{th}$ step, within the $(p+1)^{th}$ holding phase, $V_{tp}$ p the wheel speed filtered using the straight line at the end of the $p^{th}$ holding phase and $V_{tp}$ p the determined slope of the straight line in the holding phase.

## Revendications

1. Système de régulation anti-blocage comportant un capteur de valeur de mesure pour déterminer la vitesse des roues, un circuit d'exploitation qui reçoit les signaux du capteur de valeur de mesure et génère des signaux de commande de pression de frein indépendamment du comportement du mouvement des roues pour les fournir à une installation de commande de pression de frein pour modifier la pression de frein des roues du véhicule, et le circuit d'exploitation fournit une grandeur de vitesse de référence approchée du profil de la vitesse du véhicule dans le circuit d'exploitation à l'aide des signaux de vitesse des roues, cette grandeur étant utilisée avec les signaux du capteur de valeur de mesure pour déterminer le patinage, on détermine la décélération du véhicule et on l'utilise pour définir la pente de la vitesse de référence, système caractérisé en ce que chaque fois dans les phases 1, ... p, (n+1)... du maintien de la pression constante entre deux étapes de montée en pression on détermine en continu des grandeurs An ... En selon les relations suivantes en procédant par récurrence :

$$A_n = n + W_1$$

$$B_n = \Delta t \sum_{i=1}^{n} i$$

$$C_n = \sum_{i=1}^{n} V_{R_{ti}}^{p+1} + W_1 \hat{V}_{tp}^{p}$$

$$D_n = \Delta t^2 \sum_{i=1}^{n} i \cdot i^2 + W_2$$

$$E_n = \Delta t \sum_{i=1}^{n} V_{R_{ti}}^{p+1} \cdot i + W_2 \hat{\dot{V}}_{tp}^{p}$$

et en ce que la pente $\hat{\dot{V}}_i^{p+1}$ des droites correspondant au tracé moyen de la vitesse de roue, s'obtient si nécessaire selon la relation

$$\hat{\dot{V}}^{p+1} = \frac{B_n \cdot C_n - A_n E_n}{B_n^2 - A_n \cdot D_n} \qquad n = 1, \ldots N$$

et en ce qu'on utilise ultérieurement la pente ainsi déterminée comme pente de la vitesse de référence, $W_1$ et $W_2$ étant des coefficients de pondération, $\Delta t$ étant l'intervalle de temps pour déterminer la vitesse de roue au cours de la phase de maintien i = 1 ... N des nombres de pas compris entre 1 et le nombre maximum de pas N, $V_{R_{ti}}^{p+1}$ étant la vitesse au cours de la phase de maintien (p+1) mesurée au cours du pas numéro i, $\hat{V}_{tp}^{p}$ étant la vitesse de roue filtrée à la fin de la phase de maintien p suivant les droites et $\hat{\dot{V}}_{tp}^{p}$ étant la pente déterminée des droites au cours de la phase de maintien.

Fig.1

Fig.2